(19) Europäisches Patentamt
European Patent Office
Office européen des brevets

(11) EP 4 340 096 A1

(12) **EUROPEAN PATENT APPLICATION**

(43) Date of publication:
**20.03.2024 Bulletin 2024/12**

(21) Application number: **23197272.0**

(22) Date of filing: **13.09.2023**

(51) International Patent Classification (IPC):
***H01M 10/0567*** (2010.01) ***H01M 10/0525*** (2010.01)
***H01M 10/42*** (2006.01) *H01M 10/0569* (2010.01)

(52) Cooperative Patent Classification (CPC):
**H01M 10/0567; H01M 10/0525; H01M 10/4235;**
H01M 10/0569; H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 KR 20220117093**
**19.07.2023 KR 20230093842**

(71) Applicants:
- **SK On Co., Ltd.**
**Seoul 03161 (KR)**
- **SK Innovation Co., Ltd.**
**Seoul 03188 (KR)**

(72) Inventors:
- **SHIM, Yu Na**
**34124 Daejeon (KR)**
- **KIM, Myoung Lae**
**34124 Daejeon (KR)**

(74) Representative: **Stolmár & Partner Patentanwälte PartG mbB**
**Blumenstraße 17**
**80331 München (DE)**

# (54) ELECTROLYTE SOLUTION FOR LITHIUM SECONDARY BATTERY AND LITHIUM SECONDARY BATTERY INCLUDING THE SAME

(57) According to an exemplary embodiment, an electrolyte solution for a lithium secondary battery including 1,3-dioxane additive; an organic solvent; and a lithium salt may be provided. Thereby, the lithium secondary battery including the electrolyte solution for a lithium secondary battery may implement improved high-temperature storage characteristics.

EP 4 340 096 A1

## Description

BACKGROUND

1. Field

The disclosure of the present application relates to an electrolyte solution for a lithium secondary battery and a lithium secondary battery including the same. More specifically, the present disclosure relates to an electrolyte solution for a lithium secondary battery, which includes a solvent and an electrolyte salt, and a lithium secondary battery including the electrolyte solution.

2. Description of the Related Art

A secondary battery is a battery which can be repeatedly charged and discharged. With rapid progress of information and communication, and display industries, the secondary battery has been widely applied to various portable telecommunication electronic devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

For example, the lithium secondary battery may include: an electrode assembly including a cathode, an anode, and a separation membrane (separator); and an electrolyte solution in which the electrode assembly is impregnated. The lithium secondary battery may further include, for example, a pouch-shaped outer case in which the electrode assembly and the electrolyte solution are housed.

Due to the repeated charging and discharging, damage to a surface of a nickel-based lithium metal oxide may occur, output and capacity may be decreased, and a side reaction between the nickel-based lithium metal oxide and an electrolyte may occur.

SUMMARY

An object of the present disclosure is to provide an electrolyte solution for a lithium secondary battery, which provides improved thermal and chemical stabilities.

Another object of the present disclosure is to provide a lithium secondary battery which includes the electrolyte solution and has improved thermal and chemical stabilities.

To achieve the above objects, according to an aspect of the present disclosure, there is provided an electrolyte solution for a lithium secondary battery including: an additive including a compound represented by Chemical Formula 1 below; an organic solvent; and a lithium salt:

[Chemical Formula 1]

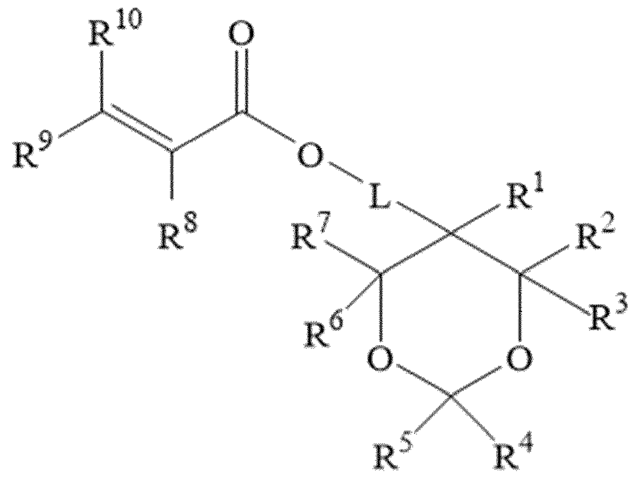

In Chemical Formula 1, $R^1$ to $R^{10}$ are the same as or different from each other, and are each independently hydrogen, or a substituted or unsubstituted $C_1$-$C_{10}$ alkyl group, and L is a substituted or unsubstituted $C_1$-$C_{10}$ alkylene group.

In some embodiments, $R^1$ to $R^{10}$ may be the same as or different from each other, and may be each independently hydrogen or a substituted or unsubstituted $C_1$-$C_6$ alkyl group, and L may be a substituted or unsubstituted $C_1$ to $C_6$ alkylene group.

In some embodiments, $R^1$ to $R^{10}$ may be the same as or different from each other, and may be each independently hydrogen or an unsubstituted $C_1$ to $C_6$ alkyl group, and L may be an unsubstituted $C_1$ to $C_6$ alkylene group.

In some embodiments, the additive may be included in an amount of 0.1 to 10% by weight based on a total weight of the electrolyte solution.

In some embodiments, the additive may be included in an amount of 0.3 to 7% by weight based on the total weight of the electrolyte solution.

In some embodiments, the electrolyte solution may include at least one auxiliary additive selected from the group consisting of a cyclic carbonate compound, a fluorine-substituted cyclic carbonate compound, a sultone compound, a cyclic sulfate compound and a fluorophosphate compound.

In some embodiments, the auxiliary additive may be included in an amount of 0.01 to 10% by weight based on the total weight of the electrolyte solution.

In some embodiments, the auxiliary additive may be included in an amount of 0.05 to 5% by weight based on the total weight of the electrolyte solution.

In some embodiments, the organic solvent may include at least one selected from the group consisting of a carbonate organic solvent, an ester organic solvent, an ether organic solvent, a ketone organic solvent and an aprotic organic solvent.

According to another aspect of the present disclosure, there is provided a lithium secondary battery including: an electrode assembly in which a plurality of cathodes and a plurality of anodes are repeatedly laminated; a case in which the electrode assembly is housed; and the electrolyte solution for a lithium secondary battery according to the above-described embodiments housed in the case together with the electrode assembly.

The electrolyte solution for a lithium secondary battery according to embodiments of the present disclosure may include a specific amount of 1,3-dioxane additive to implement a lithium secondary battery with improved high-temperature storage characteristics.

For example, cell performance may be enhanced by improving a capacity retention rate of the battery under high-temperature conditions, and preventing increases in the resistance and thickness.

BRIEF DESCRIPTION OF THE DRAWINGS

FIGS. 1 and 2 are a schematic plan view and a cross-sectional view illustrating a lithium secondary battery according to exemplary embodiments, respectively.

DETAILED DESCRIPTION OF THE INVENTION

As used herein, the "X compound" may refer to a compound including an X unit attached to a matrix, etc. of the "X compound" and a derivative thereof.

As used herein, the "$C_a$-$C_b$" may refer to "the number of carbon (C) atoms of a to b."

**<Electrolyte solution for lithium secondary battery>**

An electrolyte solution for a lithium secondary battery according to exemplary embodiments may include: a lithium salt; an organic solvent; and an additive including a compound represented by Chemical Formula 1 below.

Hereinafter, components of the present disclosure will be described in more detail.

**Additive**

The electrolyte solution for a lithium secondary battery according to exemplary embodiments may include an additive including a compound represented by Chemical Formula 1.

[Chemical Formula 1]

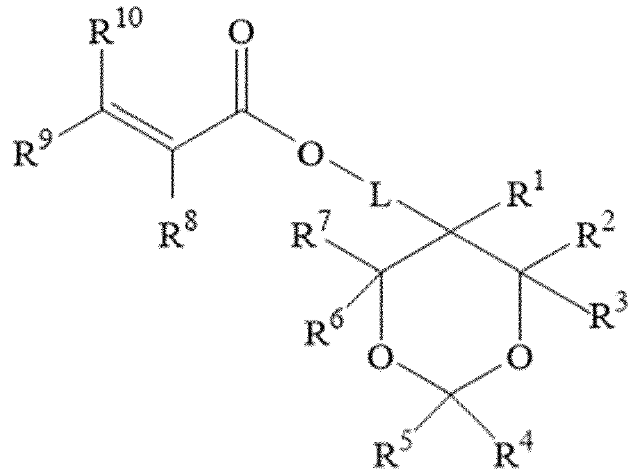

In Chemical Formula 1, $R^1$ to $R^{10}$ may be each independently the same as or different from each other.

For example, $R^1$ to $R^{10}$ may be each independently hydrogen or a substituted or unsubstituted $C_1$ to $C_{10}$ alkyl group. In one embodiment, $R^1$ to $R^{10}$ may be each independently hydrogen, or a substituted or unsubstituted $C_1$ to $C_6$ alkyl group, and for example, may be each independently hydrogen or an unsubstituted $C_1$ to $C_6$ alkyl group.

For example, L may be a substituted or unsubstituted $C_1$-$C_{10}$ alkylene group. In one embodiment, L may be a substituted or unsubstituted $C_1$ to $C_6$ alkylene group, and for example, may be an unsubstituted $C_1$ to $C_6$ alkylene group.

For example, the alkyl group may mean a portion composed of carbon and hydrogen in a molecule. The alkyl group may mean a form in which one hydrogen atom is separated from each of carbon atoms at both ends of alkane ($-C_nH_{2n}-$). For example, $CH_3$-$CH_2$-$CH_2$-may mean a propyl group.

For example, the alkylene group may mean a form in which one hydrogen atom is separated from each of carbon atoms at both ends of the alkane ($-C_nH_{2n}-$). For example, $-CH_2$-$CH_2$-$CH_2-$ may mean a propylene group.

For example, the meaning of "substituted" may mean that a hydrogen atom of the alkylene group is substituted with a substituent, such that the substituent can be further bonded to a carbon atom of the alkylene group. For example, the substituent may be at least one of a halogen group, a $C_1$-$C_6$ alkyl group, a $C_2$-$C_6$ alkenyl group, an amino group, a $C_1$-$C_6$ alkoxy group, a $C_3$-$C_7$ cycloalkyl group, and a 5- to 7-membered heterocycloalkyl group.

In some embodiments, the substituent may be a halogen group or a $C_1$-$C_6$ alkyl group.

When the additive including the compound represented by Chemical Formula 1 above is included in the electrolyte solution for a secondary battery, a formation of a robust solid electrolyte membrane (SEI) may be induced on an electrode through a decomposition reaction of cyclic ether, thus to form a stable electrode interface at a high temperature. Therefore, decomposition of the organic solvent (e.g., EC, EMC, etc.) may be effectively prevented, and a generation of gas and an increase in the battery thickness may be decreased.

In one embodiment, the compound represented by Chemical Formula 1 may include (5-ethyl-1,3-dioxan-5-yl)methyl acrylate. The (5-ethyl-1,3-dioxan-5-yl)methyl acrylate may be represented by Chemical Formula 1-1 below.

[Chemical Formula 1-1]

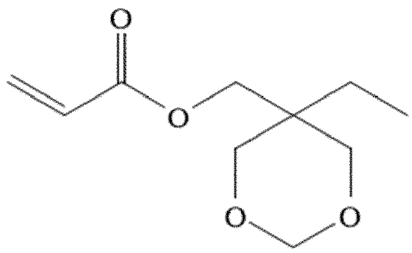

For example, when the (5-ethyl-1,3-dioxan-5-yl)methyl acrylate is included in the electrolyte solution of a secondary battery as an additive, a stable SEI film may be formed on the electrode by the acrylate group, thus to improve high-temperature storage characteristics. In addition, the decomposition of the electrolyte solution due to a reaction between the electrolyte solution and the electrode may be suppressed, thus to reduce the generation of gas.

In one embodiment, in consideration of the implementation of sufficient passivation and the formation of stable SEI film, a content of the additive may be adjusted to 0.1% by weight ("wt.%") or more, 0.2 wt.% or more, 0.3 wt.% or more, 0.4 wt.% or more, 0.5 wt.%, or 1 wt.% or more based on a total weight of the electrolyte solution.

In one embodiment, in consideration of the movement of lithium ions and the activity of active material in the electrolyte solution, the content of the additive may be adjusted to 10 wt.% or less, 9 wt.% or less, 7 wt.% or less, 6 wt.% or less, 5 wt.% or less, 4.5 wt.% or less, 4 wt.% or less, 3.5 wt.% or less, 3 wt.% or less, or 2 wt.% or less based on the total weight of the electrolyte solution.

**Auxiliary additive**

The electrolyte solution for a lithium secondary battery according to exemplary embodiments may further include an auxiliary additive together with the above-described additive.

The auxiliary additive may include, for example, a cyclic carbonate compound, a fluorine-substituted carbonate compound, a sultone compound, a cyclic sulfate compound and a phosphate compound.

In one embodiment, a content of the auxiliary additive may be adjusted to, for example, 10 wt.% or less, 9 wt.% or less, 8 wt.% or less, 7 wt.% or less, 6 wt.% or less, 5 wt.% or less, 4 wt.% or less, 3 wt.% or less, 2 wt.% or less, or 1 wt.% or less of the total weight of the electrolyte solution in consideration of the action with the additive including the compound represented by Chemical Formula 1.

In one embodiment, the content of the auxiliary additive may be adjusted to 0.01 wt.% or more, 0.02 wt.% or more, 0.03 wt.% or more, 0.05 wt.% or more, 0.1 wt.% or more, 0.2 wt.% or more, 0.3 wt.% or more, 0.4 wt.% or more, or 0.5 wt.% or more in consideration of the stabilization of the SEI film.

In one embodiment, the auxiliary additive may be included in an amount of about 0.01 to 10 wt.%, 0.05 to 7 wt.%, or 0.05 to 5 wt.% based on the total weight of the electrolyte solution. Within the above range, durability of the protective film may be enhanced, and high-temperature storage characteristics may be improved without inhibiting the role of the main additive.

The cyclic carbonate compound may include vinylene carbonate (VC), vinyl ethylene carbonate (VEC) and the like.

The fluorine-substituted cyclic carbonate compound may include fluoroethylene carbonate (FEC).

The sultone compound may include 1,3-propane sultone, 1,3-propene sultone, 1,4-butane sultone and the like.

The cyclic sulfate compound may include 1,2-ethylene sulfate, 1,2-propylene sulfate and the like.

The phosphate compound may include lithium difluorophosphate as the fluorophosphate compound.

In one embodiment, as the auxiliary additive, the fluorine-substituted cyclic carbonate compound, the sultone compound, the cyclic sulfate compound, and the fluorophosphate compound may be used together.

When additionally including the auxiliary additive, durability and stability of the electrode may be further improved. The auxiliary additive may be included in an appropriate amount within a range that does not inhibit the movement of lithium ions in the electrolyte solution.

## Organic solvent and lithium salt

The organic solvent may include, for example, an organic compound which provides sufficient solubility to the lithium salt, the additive and the auxiliary additive, and does not have reactivity in the battery.

In some embodiments, the organic solvent may include at least one selected from the group consisting of a carbonate organic solvent, an ester organic solvent, an ether organic solvent, a propionate organic solvent, and a fluorine organic solvent.

In some embodiments, the organic solvent may include a carbonate solvent. For example, the carbonate solvent may include a linear carbonate solvent and a cyclic carbonate solvent. In some embodiments, the organic solvent may include the linear carbonate solvent more than the cyclic carbonate solvent based on a volume. For example, a mixing volume ratio of the linear carbonate solvent and the cyclic carbonate solvent may be 1:1 to 9:1, or 1.5:1 to 4:1.

For example, the linear carbonate solvent may include at least one of dimethyl carbonate (DMC), ethyl methyl carbonate (EMC), diethyl carbonate (DEC), methyl propyl carbonate, ethyl propyl carbonate and dipropyl carbonate.

For example, the cyclic carbonate solvent may include at least one of ethylene carbonate (EC), propylene carbonate (PC) and butylene carbonate.

For instance, examples of the ester solvent may include methyl acetate (MA), ethyl acetate (EA), n-propyl acetate (n-PA), 1,1-dimethylethyl acetate (DMEA), methyl propionate (MP), ethyl propionate (EP), γ-butyrolacton (GBL), decanolide, valerolactone, mevalonolactone, caprolactone and the like.

For example, the ether solvent may include at least one of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.

An example of the ketone solvent may include cyclohexanone. Examples of the alcohol solvent may include ethyl alcohol, isopropyl alcohol and the like.

An aprotic solvent may include a nitrile solvent, an amide solvent such as dimethyl formamide (DMF), a dioxolane solvent such as 1,3-dioxolane, a sulfolane solvent and the like. These may be used alone or in combination of two or more thereof.

In one embodiment, the carbonate solvent may be used as the organic solvent. For example, the organic solvent may include ethylene carbonate (EC), ethyl methyl carbonate (EMC), diethyl carbonate (DEC), or a combination thereof.

In one embodiment, the electrolyte may include, for example, a lithium salt. The lithium salt may be expressed as $Li^+X^-$.

For example, the anion ($X^-$) of the lithium salt may be $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$ and the like. These may be used alone or in combination of two or more lithium salts.

In some embodiments, the lithium salt may include at least one of $LiBF_4$ and $LiPF_6$.

In one embodiment, the lithium salt may be included in a concentration of 0.01 to 5 M, or 0.01 to 2 M based on the organic solvent. Within the above concentration range, lithium ions and/or electrons may smoothly move during charging and discharging of the battery.

## <Lithium secondary battery>

Embodiments of the present disclosure provide a lithium secondary battery including the above-described electrolyte solution.

The lithium secondary battery according to exemplary embodiments includes an electrode assembly in which a plurality of cathodes and a plurality of anodes are repeatedly laminated; a case in which the electrode assembly is housed; and the electrolyte solution for a lithium secondary battery according to the above-described embodiments housed in the case together with the electrode assembly.

FIGS. 1 and 2 are a schematic plan view and a cross-sectional view illustrating a lithium secondary battery according to exemplary embodiments, respectively. For example, FIG. 2 is a cross-sectional view taken on line I-I' in FIG. 1.

Referring to FIGS. 1 and 2, the lithium secondary battery may include an electrode assembly including a cathode 100, an anode 130, and a separation membrane 140 interposed between the cathode and the anode.

The electrode assembly may be housed in the case 160 together with the electrolyte to be impregnated with the electrolyte.

The cathode 100 may include a cathode active material layer 110 formed by applying a cathode active material to a cathode current collector 105. The cathode active material may include a compound capable of reversibly intercalating and deintercalating lithium ions.

In exemplary embodiments, the cathode active material may include a lithium-transition metal oxide. For example, the lithium-transition metal oxide includes nickel (Ni), and may further include at least one of cobalt (Co) and manganese (Mn).

For example, the lithium-transition metal oxide may be represented by Chemical Formula 2 below.

[Chemical Formula 2] $Li_{1+a}Ni_{1-(x+y)}Co_xM_yO_2$

In Chemical Formula 2, a, x and y may be in a range of - 0.05≤a≤0.2, 0.01≤x≤0.3, 0.01≤y≤0.3 respectively, and M may be one or more elements selected from Mn, Mg, Sr, Ba, B, Al, Si, Ti, Zr or W.

As shown in Chemical Formula 2, a lithium-transition metal compound may include Ni in the highest content or molar ratio among Ni, Co and M. Ni may actually function as a metal related to output and/or capacity of the lithium secondary battery, and as Ni is included in the highest amount among transition metals, it is possible to implement a high capacity, high output lithium secondary battery.

In one embodiment, in Chemical Formula 2, x and y may satisfy 0.01≤x≤0.2 and 0.01≤y≤0.2. In one embodiment, the molar ratio of Ni may be 0.7 or more, or 0.8 or more.

When the content of Ni in the cathode active material or the lithium-transition metal oxide is increased, relatively chemical stability, for example, high-temperature storage stability of the secondary battery may be deteriorated. In addition, due to surface damage of the cathode active material or side reaction with the electrolyte solution according to the repeated charging/discharging, sufficient high output/high capacity characteristics according to the high content of Ni may not be implemented.

However, as described above, the fluorine additive may be bonded to Ni on the surface of the cathode active material or lithium-transition metal oxide through a coordinate bond or chemical interaction to provide passivation of the cathode active material. Therefore, the high output/high capacity characteristics through the high content of Ni may be substantially and uniformly maintained for a long time even in a high temperature environment.

A slurry may be prepared by mixing and stirring the cathode active material with a binder, a conductive material and/or a dispersant in a solvent. The slurry may be applied to the cathode current collector 105, followed by compressing and drying to prepare the cathode 100.

The cathode current collector 105 may include, for example, stainless steel, nickel, aluminum, titanium, copper or an alloy thereof, and preferably aluminum or an aluminum alloy.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer may be reduced and an amount of the cathode active material or lithium metal oxide particles may be relatively increased. Thereby, the output and capacity of the secondary battery may be improved.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as $LaSrCoO_3$, and $LaSrMnO_3$, etc.

The anode 130 may include an anode current collector 125 and an anode active material layer 120 formed by coating the anode current collector 125 with an anode active material.

The anode active material useable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; a silicon (Si) compound or tin, etc. may be used. Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

The silicon compound may include, for example, a silicon-carbon composite compound such as silicon oxide or silicon carbide (SiC).

For example, a form of slurry may be prepared by mixing the anode active material with a binder, a conductive material, thickener, and the like in a solvent, followed by stirring the same. The slurry may be applied to at least one surface of the anode current collector 125, followed by compressing and drying to prepare the anode 130.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

In some embodiments, the anode 130 may have an area (e.g., a contact area with the separation membrane 140) and/or volume larger than those/that of the cathode 100. Thereby, lithium ions generated from the cathode 100 may smoothly move to the anode 130 without being precipitated in the middle, for example.

According to exemplary embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, lamination, folding, and the like of the separation membrane 140.

The electrode assembly 150 may be housed in the case 160 together with the non-aqueous electrolyte solution according to the exemplary embodiments described above to define the lithium secondary battery. According to exemplary embodiments, the non-aqueous electrolyte solution may be used as the electrolyte.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch type or a coin shape.

Hereinafter, specific experimental examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

## Synthesis example

### Synthesis of (5-ethyl-1,3-dioxan-5-yl)methyl acrylate

5-ethyl-1,3-dioxane-5-methanol (50 g, 0.34 mol), methyl acrylate (73.6 g, 0.86 mol), dioctyl tin oxide (0.72 g), 4-methoxyphenol (0.7 g) and 10 ml of normal hexane were input into a round-bottom flask equipped with a stirrer, a thermometer and a condenser , followed by stirring the same. The temperature of the reaction solution was increased to 90°C, and the mixture was stirred for 24 hours while removing methanol. After completion of the reaction, the mixture was distilled under reduced pressure to obtain 61.6 g of Compound a to be used in Example 1 as a colorless liquid sample (yield: 90%)

1H-NMR(500MHz, chloroform-d): 6.42(1H, d), 6.15(1H, dd), 5.86(1H, d), 4.97(1H, d), 4.69(1H, d), 4.36(2H, s), 3.88(2H, d), 3.53(2H, d), 1.36(2H, q), 0.86(3H, t)

## Examples and Comparative Examples

### Example 1

#### (1) Preparation of electrolyte solution

1.0 M $LiPF_6$ solution (a mixed solvent of EC/EMC in a volume ratio of 30:70) was prepared. An electrolyte solution was prepared by inputting 1 wt.% of fluoroethylene carbonate (FEC), 0.5 wt.% of 1,3-propanesultone (PS), and 0.5 wt.% of 1,3-propenesultone (PRS) into the $LiPF_6$ solution based on the total weight of the electrolyte solution, and inputting 1 wt.% of (5-ethyl-1,3-dioxan-5-yl)methyl acrylate according to the synthesis example.

#### (2) Preparation of lithium secondary battery sample

A slurry was prepared by mixing $Li[Ni_{0.8}Co_{0.1}Mn_{0.1}]O_2$ as a cathode active material, carbon black as a conductive material, and a polyvinylidene fluoride (PVDF) as a binder in a weight ratio of 92:5:3. The slurry was uniformly applied to an aluminum foil having a thickness of 15 pm, followed by vacuum drying and pressing at 130°C to prepare a cathode for a lithium secondary battery.

An anode slurry was prepared by mixing 97 wt.% of anode active material in which artificial graphite and natural graphite are mixed in a weight ratio of 7:3, 1 wt.% of Super-P as a conductive material, styrene-butadiene rubber (SBR) as a binder, and 2 wt.% carboxymethyl cellulose (CMC) as a thickener. The anode slurry was uniformly applied to a copper foil having a thickness of 15 pm, followed by drying and pressing to prepare an anode.

The anode slurry was uniformly applied to a region of an aluminum foil (thickness 15 pm) having a protrusion

part (anode tab) on one side except for the protrusion part, followed by drying and pressing to prepare an anode.

The cathode and the anode prepared as described above were cut into a predetermined size and laminated, and a separator (polyethylene, thickness 20 μm) was interposed between the cathode and the anode to form an electrode assembly, and then tab parts of the cathode and the anode were welded, respectively.

The electrode assembly was put into a pouch, followed by sealing three sides of the pouch except for an electrolyte injection side. At this time, a portion having the electrode tab was included in the sealing part. After injecting the electrolyte solution prepared in (1) above through the remaining side except for the sealing part, and the remaining side was also sealed, followed by impregnation for 12 hours or more to manufacture a lithium secondary battery sample.

**Example 2**

A lithium secondary battery sample was manufactured according to the same procedures as described in Example 1, except that 0.5 wt.% of the additive (5-ethyl-1,3-dioxan-5-yl)methyl acrylate was included when preparing the electrolyte solution.

**Example 3**

A lithium secondary battery sample was manufactured according to the same procedures as described in Example 1, except that 0.3 wt.% of the additive (5-ethyl-1,3-dioxan-5-yl)methyl acrylate was included when preparing the electrolyte solution.

**Comparative Example 1**

A lithium secondary battery sample was manufactured according to the same procedures as described in Example 1, except that (5-ethyl-1,3-dioxan-5-yl)methyl acrylate as the additive was not input when preparing the electrolyte solution.

**Experimental Example**

**(1) Evaluation of initial characteristics**

**1-1) Evaluation of initial capacity**

The lithium secondary batteries of the examples and comparative examples were charged with 0.5C-rate CC/CV (4.2 V, 0.05C cut-off) at 25°C, and were discharged with 0.5C-rate CC (2.7 V cut-off), then the discharge capacities were measured. This process was conducted 3 times.

**1-2) Evaluation of direct current internal resistance (DCIR)**

For each of the secondary batteries of the examples and comparative examples, at 60% point of state-of-charge (SOC), when sequentially increasing the C-rate to 0.2C, 0.5C, 1.0C, 1.5C, 2.0C, 2.5C and 3.0C, and performing charging and discharging at the corresponding C-rate for 10 seconds, terminal points of the voltage were composed with an equation of a straight line and a slope thereof was adopted as the DCIR.

**(2) Evaluation of high-temperature storage characteristics at 60 °C**

**2-1) Evaluation of direct current internal resistance (DCIR)**

Internal resistances (D_DCIR) of the secondary batteries of the examples and comparative examples were measured according to the same procedures as described in 1-2) above. Evaluation results are shown in Table 1 below.

**2-1) Evaluation of capacity retention rate (Ret)**

The secondary batteries of the examples and comparative examples were discharged with 0.5 C-rate CC (2.7 V cut-off), and discharge capacity was measured, respectively. Then, the capacity retention rate was calculated by measuring the discharge capacity after high temperature storage and converting it into a percentage compared to the initial capacity measured in 1-1) by the following equation.

$$\text{Capacity retention rate (\%)} = (\text{Discharge capacity after high temperature storage / Initial capacity}) \times 100$$

Evaluation results are shown in Table 1 below.

**3-1) Evaluation of thickness increase rate (%)**

The lithium secondary batteries of the examples and comparative examples were charged with 0.5C CC/CV (4.2 V 0.05C CUT-OFF) at 25°C, then a battery thickness T1 was measured, respectively.

The charged lithium secondary batteries of the examples and comparative examples were left under the condition of being exposed to the atmosphere at 60°C for 7 weeks (using a thermostat), a battery thickness T2 was measured, respectively. The battery thickness was measured using a plate thickness measuring device (Mitutoyo, 543-490B). The battery thickness increase rate was calculated by the following equation.

$$\text{Battery thickness increase rate (\%)} = T2/T1 \times 100\ (\%)$$

Evaluation results are shown in Table 1 below.

[TABLE 1]

| Secondary battery | | Example 1 | Example 2 | Example 3 | Comparative Example 1 |
|---|---|---|---|---|---|
| Initial characte ristic | Capacity (mAh) | 1709 | 1712 | 1702 | 1706 |
| | DCIR (mS2) | 40.6 | 39.9 | 38.7 | 38.7 |
| High temperat ure storage characte ristic (7 weeks) | DCIR (mS2) | 41.3 | 40.5 | 42.8 | 40.2 |
| | Capacity (mAh) | 1653.7 | 1678.9 | 1622.3 | 1596.1 |
| | Capacity retention rate (%) | 97% | 98% | 95% | 94% |
| | Thickness (mm) | 5.9 | 5.7 | 5.9 | 6.3 |
| | Thickness increase rate (%) | 1160 | 114% | 117% | 120.5% |

Referring to Table 1, the lithium secondary batteries according to Examples 1 to 3 had a higher capacity retention rate and a lower thickness increase rate than the lithium secondary battery according to Comparative Example 1 when evaluating the high-temperature storage characteristics. In addition, the lithium secondary batteries according to Examples 1 and 2 had a lower resistance increase rate than the lithium secondary battery according to Comparative Example 1 when evaluating the high-temperature storage characteristics.

**Claims**

**1.** An electrolyte solution for a lithium secondary battery comprising:

an additive including a compound represented by Chemical Formula 1 below;
an organic solvent; and
a lithium salt:

[Chemical Formula 1]

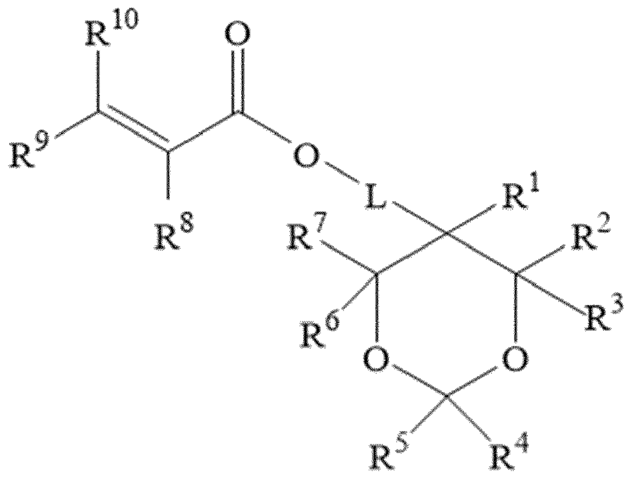

Wherein, in Chemical Formula 1, $R^1$ to $R^{10}$ are the same as or different from each other, and are each independently hydrogen, or a substituted or unsubstituted $C_1$-$C_{10}$ alkyl group, and L is a substituted or unsubstituted $C_1$-$C_{10}$ alkylene group.

**2.** The electrolyte solution for a lithium secondary battery according to claim 1, wherein $R^1$ to $R^{10}$ are the same as or different from each other, and are each independently hydrogen or a substituted or unsubstituted $C_1$-$C_6$ alkyl group, and L is a substituted or unsubstituted $C_1$ to $C_6$ alkylene group.

**3.** The electrolyte solution for a lithium secondary battery according to claim 1 or claim 2, wherein $R^1$ to $R^{10}$ are the same as or different from each other, and are each independently hydrogen or an unsubstituted $C_1$ to $C_6$ alkyl group, and L is an unsubstituted $C_1$ to $C_6$ alkylene group.

**4.** The electrolyte solution for a lithium secondary battery according to any one of claims 1 to 3, wherein the additive is included in an amount of 0.1 to 10% by weight based on a total weight of the electrolyte solution.

**5.** The electrolyte solution for a lithium secondary battery according to any one of claims 1 to 4, wherein the additive is included in an amount of 0.3 to 7% by weight based on the total weight of the electrolyte solution.

**6.** The electrolyte solution for a lithium secondary battery according to any one of claims 1 to 5, wherein the electrolyte solution comprises at least one auxiliary additive selected from the group consisting of a cyclic carbonate compound, a fluorine-substituted cyclic carbonate compound, a sultone compound, a cyclic sulfate compound and a fluorophosphate compound.

**7.** The electrolyte solution for a lithium secondary battery according to claim 6, wherein the auxiliary additive is included in an amount of 0.01 to 10% by weight based on the total weight of the electrolyte solution.

**8.** The electrolyte solution for a lithium secondary battery according to claim 6 or claim 7, wherein the auxiliary additive is included in an amount of 0.05 to 5% by weight based on the total weight of the electrolyte solution.

**9.** The electrolyte solution for a lithium secondary battery according to any one of claims 1 to 8, wherein the organic solvent includes at least one selected from the group consisting of a carbonate organic solvent, an ester organic solvent, an ether organic solvent, a ketone organic solvent and an aprotic organic solvent.

**10.** A lithium secondary battery comprising:

an electrode assembly in which a plurality of cathodes and a plurality of anodes are repeatedly laminated;
a case in which the electrode assembly is housed; and
the electrolyte solution for a lithium secondary battery according to any one of claims 1 to 9 housed in the case

together with the electrode assembly.

FIG. 1

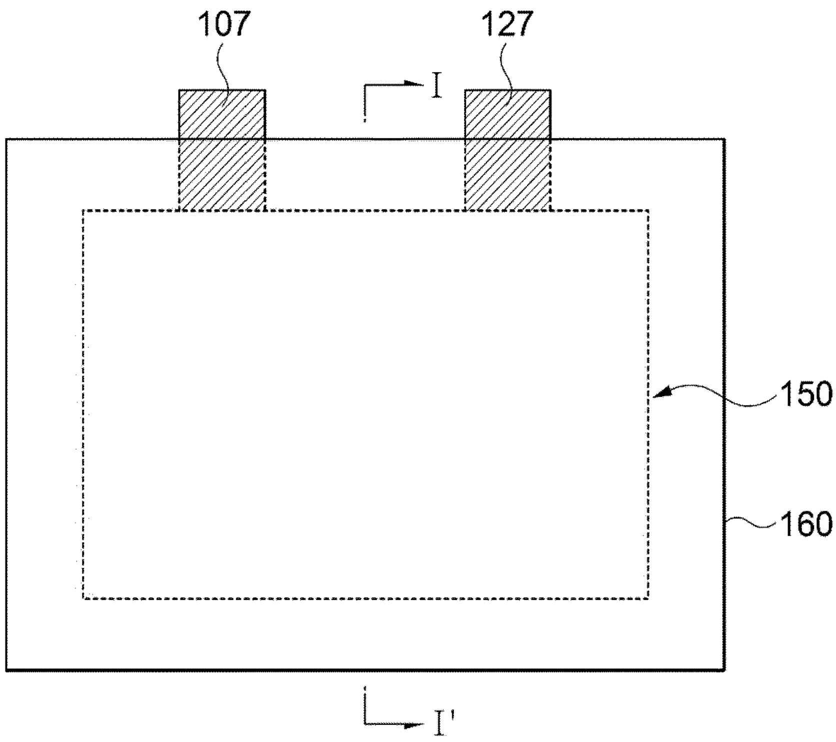


FIG. 2

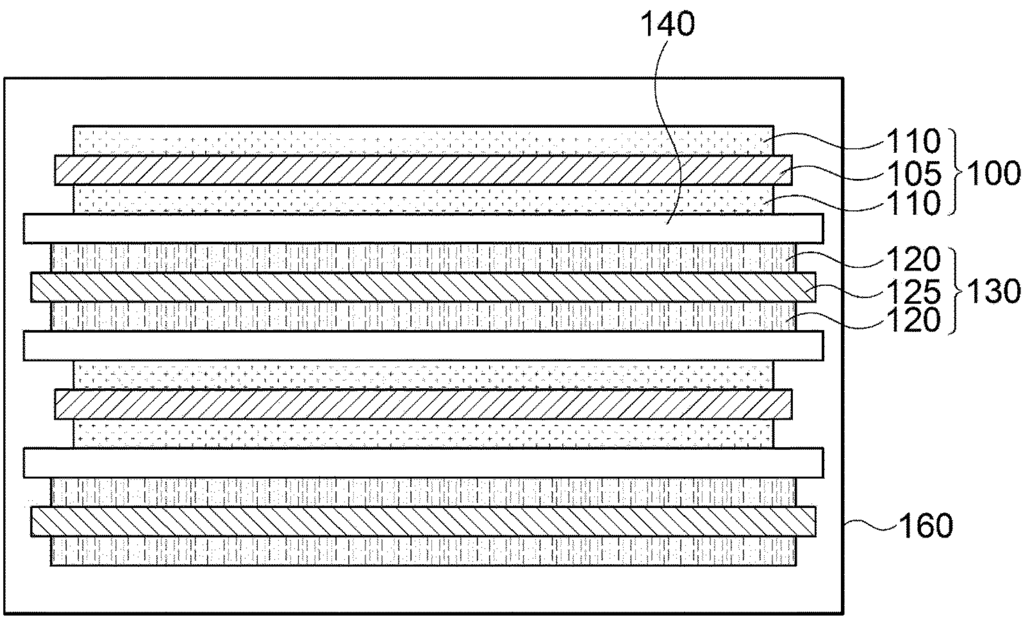

Europäisches Patentamt
European Patent Office
Office européen des brevets

# EUROPEAN SEARCH REPORT

Application Number
EP 23 19 7272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | CN 113 140 731 A (UNIV. ZHEJIANG) 20 July 2021 (2021-07-20)<br>* abstract *<br>* example 3 *<br>* claims 1, 4 *<br>----- | 1-3,9,10<br><br>4-8 | INV.<br>H01M10/0567<br>H01M10/0525<br>H01M10/42<br><br>ADD.<br>H01M10/0569 |
| Y<br><br>A | US 2020/373619 A1 (MURATA MANUFACTURING CO., LTD.) 26 November 2020 (2020-11-26)<br>* paragraph [0006] - paragraph [0013] *<br>* paragraph [0068] - paragraph [0071] *<br>* paragraph [0076] - paragraph [0084] *<br>* paragraph [0096] - paragraph [0106] *<br>* paragraph [0111] - paragraph [0112] *<br>* examples 1-13; table 1 *<br>* examples 23-28; table 2 *<br>* claims 1-4, 10 *<br>----- | 4-8<br><br>1-3,9,10 | |
| Y<br><br>A | US 2019/312310 A1 (UBE INDUSTRIES, LTD.) 10 October 2019 (2019-10-10)<br>* paragraph [0014] - paragraph [0019] *<br>* paragraph [0021] - paragraph [0023] *<br>* paragraph [0027] - paragraph [0036] *<br>* paragraph [0044] - paragraph [0049] *<br>* paragraph [0056] *<br>* paragraph [0061] - paragraph [0080] *<br>* paragraph [0082] - paragraph [0087] *<br>* examples 1-9; table 1 *<br>* examples 10-25; table 2 *<br>* examples 26-30; table 4 *<br>* claims 1-6, 12, 13 *<br>-----<br>-/-- | 4-8<br><br>1-3,9,10 | TECHNICAL FIELDS SEARCHED (IPC)<br><br>H01G<br>H01M |

The present search report has been drawn up for all claims

1

| Place of search | Date of completion of the search | Examiner |
|---|---|---|
| Munich | 26 January 2024 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

European Patent Office

# EUROPEAN SEARCH REPORT

Application Number
EP 23 19 7272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2013/093392 A1 (SONY CORP.) 18 April 2013 (2013-04-18)<br>* paragraph [0005] - paragraph [0010] *<br>* paragraph [0095] - paragraph [0098] *<br>* paragraph [0100] *<br>* paragraph [0103] - paragraph [0114] *<br>* paragraph [0121] - paragraph [0126] *<br>* paragraph [0313] - paragraph [0314]; compounds A-D *<br>* examples 1.1-1.12, 1.69-1.74; table 1 *<br>* examples 3.1-3.12; table 3 *<br>* examples 4.1-4.12; table 4 *<br>* examples 5.1-5.12; table 5 *<br>* examples 6.1-6.12; table 6 *<br>* examples 7.1-7.12; table 7 *<br>* claims 1, 7, 8, 12 *<br>----- | 4-8<br>1-3,9,10 | |

TECHNICAL FIELDS SEARCHED (IPC)

1 The present search report has been drawn up for all claims

| Place of search | Date of completion of the search | Examiner |
|---|---|---|
| Munich | 26 January 2024 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 19 7272

This annex lists the patent family members relating to the patent documents cited in the above-mentioned European search report. The members are as contained in the European Patent Office EDP file on
The European Patent Office is in no way liable for these particulars which are merely given for the purpose of information.

26-01-2024

| Patent document cited in search report | | Publication date | Patent family member(s) | | | Publication date |
|---|---|---|---|---|---|---|
| CN 113140731 | A | 20-07-2021 | NONE | | | |
| US 2020373619 | A1 | 26-11-2020 | US | 2020373619 | A1 | 26-11-2020 |
| | | | WO | 2019156160 | A1 | 15-08-2019 |
| US 2019312310 | A1 | 10-10-2019 | CN | 110073537 | A | 30-07-2019 |
| | | | JP | 7019598 | B2 | 15-02-2022 |
| | | | JP | WO2018116879 | A1 | 24-10-2019 |
| | | | US | 2019312310 | A1 | 10-10-2019 |
| | | | WO | 2018116879 | A1 | 28-06-2018 |
| US 2013093392 | A1 | 18-04-2013 | CN | 103066328 | A | 24-04-2013 |
| | | | JP | 2013089468 | A | 13-05-2013 |
| | | | US | 2013093392 | A1 | 18-04-2013 |

EPO FORM P0459

For more details about this annex : see Official Journal of the European Patent Office, No. 12/82